(19) **Europäisches Patentamt / European Patent Office / Office européen des brevets**

(11) **EP 4 734 108 A1**

(12) # EUROPEAN PATENT APPLICATION
published in accordance with Art. 153(4) EPC

(43) Date of publication:
29.04.2026 Bulletin 2026/18

(21) Application number: 24825237.1

(22) Date of filing: 18.06.2024

(51) International Patent Classification (IPC):
$G10L\ 25/51^{(2013.01)}$    $G10L\ 25/18^{(2013.01)}$
$G10L\ 25/21^{(2013.01)}$    $G01P\ 3/00^{(2006.01)}$
$G01H\ 17/00^{(2006.01)}$

(52) Cooperative Patent Classification (CPC):
G01H 17/00; G01P 3/00; G10L 25/18; G10L 25/21; G10L 25/51

(86) International application number:
PCT/CN2024/099867

(87) International publication number:
WO 2024/260343 (26.12.2024 Gazette 2024/52)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 20.06.2023 CN 202310731674

(71) Applicant: Beijing Co Wheels Technology Co., Ltd
Beijing 101300 (CN)

(72) Inventors:
• ZHANG, Hongyang
Beijing 101300 (CN)

• HUA, Fei
Beijing 101300 (CN)
• LIU, Jianfeng
Beijing 101300 (CN)
• MENG, Yue
Beijing 101300 (CN)
• LUAN, Kai
Beijing 101300 (CN)
• NING, Yunpeng
Beijing 101300 (CN)

(74) Representative: advotec.
Patent- und Rechtsanwaltspartnerschaft mbB
Widenmayerstraße 4
80538 München (DE)

(54) **METHOD AND APPARATUS FOR IDENTIFYING ABNORMAL SOUND OF ELECTRIC MOTOR, AND COMPUTER-READABLE STORAGE MEDIUM, ELECTRONIC DEVICE AND VEHICLE**

(57) The present application relates to the technical field of data processing, and relates to a method and apparatus for identifying an abnormal sound of an electric motor, and a computer-readable storage medium, an electronic device and a vehicle. The method comprises: firstly, acquiring rotational speed information and sound time-domain data of an electric motor, determining a sampling frequency that corresponds to the rotational speed information and is required for identifying an abnormal sound; then performing down-sampling on the sound time-domain data according to the sampling frequency; on the basis of the sound time-domain data which has been subjected to down-sampling, analyzing sound energy corresponding to the rotational speed information; and by means of comparing the sound energy with a preset energy threshold value, identifying whether an abnormal sound has occurred in the electric motor. By means of using the technical solution in the present application, the calculation process for identifying an abnormal sound of an electric motor can be simplified, thereby reducing the amount of calculation and the cost for identifying the abnormal sound of the electric motor, and thus identifying an abnormal sound at a fixed order of the electric motor.

EP 4 734 108 A1

| Rotational speed information of the electric machine and sound time-domain data are acquired | 101 |

↓

| A sampling frequency required for identifying the abnormal noise corresponding to the rotational speed information is determined | 102 |

↓

| Down-sampling is performed on the sound time-domain data according to the sampling frequency | 103 |

↓

| Sound energy corresponding to the rotational speed information is analyzed based on a down-sampled sound time-domain data | 104 |

↓

| Whether the electric machine has the abnormal noise is identified by comparing the sound energy with a preset energy threshold | 105 |

FIG. 1

## Description

### Cross-reference to related applications

The application claims the priority of Chinese patent application No. 202310731674.8, filed on June 20, 2023, titled "method and apparatus for identifying abnormal noise of electric machine, electronic device and vehicle", the entire content of which is incorporated herein by reference.

### TECHNICAL FIELD

The application relates to the field of data processing technologies, and relates to, but is not limited to, a method and apparatus for identifying abnormal noise of an electric machine, a computer-readable storage medium, an electronic device and a vehicle.

### BACKGROUND

When the electric machine in a vehicle is in operation, abnormal noises such as whistling may be generated, which greatly increase passengers' irritability. Therefore, it is necessary to identify the abnormal noise of the electric machine in a timely manner and then perform corresponding maintenance promptly.

Since the orders of abnormal noises of the electric machine are generally high, a large amount of data needs to be sampled. Currently, analysis and recognition can be performed based on complete sampled data to identify the occurrence of abnormal noise in the electric machine. However, this method involves a large computing load, which in turn leads to a waste of computing resources and increases a cost of identifying the abnormal noise of the electric machine.

### SUMMARY

In view of this, the application provides a method and apparatus for identifying abnormal noise of an electric machine, a computer-readable storage medium, an electronic device and a vehicle, which can simplify a calculation process for identifying the abnormal noise of the electric machine, reduce a computing load, and lower a cost of identifying the abnormal noise of the electric machine while ensuring an accurate identification of whether the electric machine has the abnormal noise.

In a first aspect, the application provides a method for identifying abnormal noise of an electric machine, which includes:

acquiring rotational speed information of the electric machine and sound time-domain data;
determining a sampling frequency required for identifying the abnormal noise corresponding to the rotational speed information;
performing down-sampling on the sound time-domain data according to the sampling frequency;
analyzing sound energy corresponding to the rotational speed information based on a down-sampled sound time-domain data; and
identifying whether the electric machine has the abnormal noise by comparing the sound energy with a preset energy threshold.

In an optional embodiments of the application, determining the sampling frequency required for identifying the abnormal noise corresponding to the rotational speed information includes:

acquiring a first-order frequency of the electric machine corresponding to the rotational speed information;
analyzing a frequency band corresponding to the first-order frequency of the electric machine according to an empirical value of an order at which the abnormal noise occurs; and
determining a Nyquist frequency corresponding to a maximum frequency in the frequency band as the sampling frequency.

In an optional embodiments of the application, analyzing the frequency band corresponding to the first-order frequency of the electric machine according to the empirical value of the order at which the abnormal noise occurs includes:

multiplying the first-order frequency of the electric machine by the empirical value of the order at which the abnormal noise occurs; and

adding positive and negative range values to an obtained product to obtain the frequency band.

In an optional embodiments of the application, analyzing the sound energy corresponding to the rotational speed information based on the down-sampled sound time-domain data includes:

performing a butterfly odd-even permutation of Fast Fourier Transform (FFT) on the down-sampled sound time-domain data to obtain a permutation sequence;
analyzing a spectral energy corresponding to each frequency in the frequency band based on the permutation sequence and the Nyquist frequency corresponding to each frequency in the frequency band; and
taking a maximum energy obtained from the spectral energy corresponding to each frequency as the sound energy corresponding to the rotational speed information.

In an optional embodiments of the application, analyzing the spectral energy corresponding to each frequency in the frequency band based on the permutation sequence and the Nyquist frequency corresponding to each frequency in the frequency band includes:

acquiring, according to the Nyquist frequency corresponding to a target frequency, a number $K$ of time-domain samples required for the target frequency; and
selecting a target sequence corresponding to the first $K$ sampling points in the permutation sequence to perform butterfly recursive calculation of the FFT, and then multiplying a obtained result by an A-weighting coefficient to obtain the spectral energy corresponding to the target frequency.

In an optional embodiments of the application, acquiring, according to the Nyquist frequency corresponding to the target frequency, the number $K$ of time-domain samples required for the target frequency includes:
acquiring a smallest integer power of 2 greater than the Nyquist frequency corresponding to the target frequency as the number $K$ of time-domain samples.
In an optional embodiments of the application, identifying whether the electric machine has the abnormal noise by comparing the sound energy with the preset energy threshold includes:

comparing the sound energy corresponding to different rotational speeds with the preset energy threshold respectively, and configuring label information corresponding to different rotational speeds according to an extent of exceeding the preset energy threshold;
performing probability density calculation based on the label information corresponding to different rotational speeds respectively; and
determining that the electric machine has the abnormal noise in a case where a calculated probability density is greater than a preset density threshold.

In a second aspect, the application provides an apparatus for identifying abnormal noise of an electric machine, which includes:

an acquisition unit configured to acquire rotational speed information of the electric machine and sound time-domain data;
a determination unit configured to determine a sampling frequency required for identifying the abnormal noise corresponding to the rotational speed information;
a sampling unit configured to perform down-sampling on the sound time-domain data according to the sampling frequency;
an analysis unit configured to analyze sound energy corresponding to the rotational speed information based on a down-sampled sound time-domain data;
an identification unit configured to identify whether the electric machine has the abnormal noise by comparing the sound energy with a preset energy threshold.

In an optional embodiments of the application, the acquisition unit is further configured to acquire a first-order frequency of the electric machine corresponding to the rotational speed information;

the analysis unit is further configured to analyze a frequency band corresponding to the first-order frequency of the electric machine according to an empirical value of an order at which the abnormal noise occurs; and
the determination unit is further configured to determine a Nyquist frequency corresponding to a maximum frequency in the frequency band as the sampling frequency.

In an optional embodiments of the application, the determination unit is further configured to multiply the first-order frequency of the electric machine by the empirical value of the order at which the abnormal noise occurs; and add positive and negative range values to an obtained product to obtain the frequency band.

In an optional embodiments of the application, the analysis unit is further configured to perform a butterfly odd-even permutation of FFT on the down-sampled sound time-domain data to obtain a permutation sequence; analyze a spectral energy corresponding to each frequency in the frequency band based on the permutation sequence and the Nyquist frequency corresponding to each frequency in the frequency band; and take a maximum energy obtained from the spectral energy corresponding to each frequency as the sound energy corresponding to the rotational speed information.

In an optional embodiments of the application, the analysis unit is further configured to acquire, according to the Nyquist frequency corresponding to a target frequency, a number K of time-domain samples required for the target frequency; and select a target sequence corresponding to the first K sampling points in the permutation sequence to perform butterfly recursive calculation of the FFT, and then multiplying a obtained result by an A-weighting coefficient to obtain the spectral energy corresponding to the target frequency.

In an optional embodiments of the application, the analysis unit is further configured to acquire a smallest integer power of 2 greater than the Nyquist frequency corresponding to the target frequency as the number K of time-domain samples.

In an optional embodiments of the application, the identification unit is further configured to compare the sound energy corresponding to different rotational speeds with the preset energy threshold respectively, and configuring label information corresponding to different rotational speeds according to an extent of exceeding the preset energy threshold; and perform probability density calculation based on the label information corresponding to different rotational speeds respectively; and

the determination unit is further configured to determine that the electric machine has the abnormal noise in a case where a calculated probability density is greater than a preset density threshold.

In a third aspect, the application provides a computer-readable storage medium. The computer-readable storage medium stores computer programs, and when the computer programs are executed by a processor, the method for identifying abnormal noise of the electric machine of the first aspect is implemented.

In a fourth aspect, the application provides an electronic device. The electronic device includes: a storage medium, a processor, and a computer program stored on the storage medium and executable on the processor. The processor, when executing the computer program, implements the method for identifying abnormal noise of the electric machine of the first aspect.

In a fifth aspect, the application provides a vehicle. The vehicle includes the apparatus of the second aspect or the electronic device of the fourth aspect.

According to the above technical solution, the method and apparatus for identifying abnormal noise of the electric machine, the computer-readable storage medium, the electronic device and the vehicle provided in this application first acquire rotational speed information of the electric machine and sound time-domain data; determine a sampling frequency required for identifying the abnormal noise corresponding to the rotational speed information; then perform down-sampling on the sound time-domain data according to the sampling frequency; further analyze sound energy corresponding to the rotational speed information based on a down-sampled sound time-domain data; and identify whether the electric machine has the abnormal noise by comparing the sound energy with a preset energy threshold. Compared with the current method of analyzing and identifying whether the electric machine has abnormal noise based on complete sampled data, by applying the technical solution of this application, the sampling frequency required for identifying the abnormal noise corresponding to the current rotational speed of the electric machine is determined according to the current rotational speed of the electric machine, and then the down-sampling is performed on the sound time-domain data according to the sampling frequency, eliminating the need to analyze and calculate complete sampled data. Subsequently, the sound energy corresponding to the current rotational speed can be analyzed based on the down-sampled sound time-domain data, and combined with the preset energy threshold, whether the electric machine has the abnormal noise is identified. This application can simplify a calculation process for identifying the abnormal noise of the electric machine, reduce a computing load, and lower a cost of identifying the abnormal noise of the electric machine while ensuring an accurate identification of whether the electric machine has the abnormal noise.

The above description is only an overview of the technical solution of the application. In order to understand the technical means of the application more clearly and to implement these means in accordance with the contents of the specification, and to make the above and additional objects, features and advantages of the application more obvious and understandable, specific implementations of the application are illustrated below.

## BRIEF DESCRIPTION OF THE DRAWINGS

The accompanying drawings, which are incorporated in and constitute part of the specification, illustrate embodiments consistent with the application and, together with the specification, serve to explain the principles of the application.

To more clearly illustrate the technical solutions in the embodiments of the application or the prior art, the accompanying drawings required for describing the embodiments or the prior art are briefly introduced below. Obviously, those skilled in the art can obtain other accompanying drawings based on these drawings without inventive work.

FIG. 1 is a flowchart of a method for identifying abnormal noise of an electric machine according to an embodiment of the application.

FIG. 2 is a flowchart of a method for identifying abnormal noise of an electric machine according to another embodiment of the application.

FIG. 3 is an exemplary schematic diagram of a butterfly permutation according to an embodiment of the application.

FIG. 4 is an exemplary schematic diagram of a butterfly permutation according to another embodiment of the application.

FIG. 5 is an exemplary full-volume data waterfall diagram without whistling according to an embodiment of the application.

FIG. 6 is an exemplary full-volume data waterfall diagram with whistling according to an embodiment of the application.

FIG. 7 is an exemplary schematic diagram showing a display effect according to an embodiment of the application.

FIG. 8 is a schematic diagram of an apparatus for identifying abnormal noise of an electric machine according to an embodiment of the application.

## DETAILED DESCRIPTION

To better understand the above-mentioned objectives, features and advantages of the application, the solutions of the application are further described below. Although certain embodiments of the present disclosure are shown in the accompanying drawings, it should be understood that the present disclosure may be embodied in various forms and should not be construed as limited to the embodiments set forth herein. On the contrary, these embodiments are provided for a more thorough and complete understanding of the present disclosure. It should be understood that the accompanying drawings and embodiments of the present disclosure are for illustrative purposes only and are not intended to limit the scope of protection of the present disclosure. All other embodiments obtained by those of ordinary skill in the art without making creative efforts shall fall within the scope of protection of the present application.

It should be noted that, without contradiction, the embodiments of the application and features of the embodiments can be combined with each other.

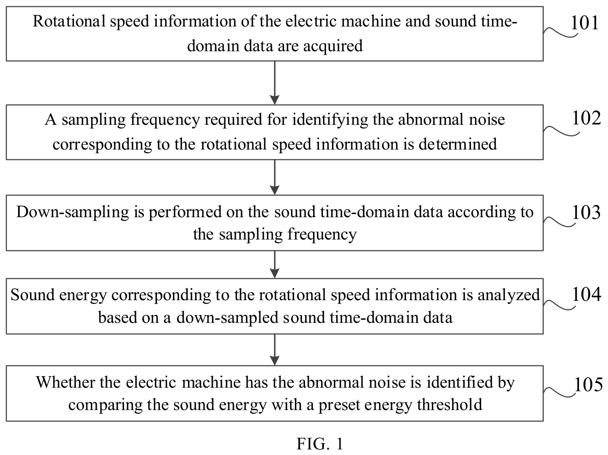

To address the technical problem in the prior art that, when the electric machine in a vehicle is in operation, the identification process for abnormal noises such as whistling that may be generated involves the large computing load, which in turn leads to the waste of computing resources and increases the cost of identifying the abnormal noise of the electric machine, this embodiment provides a method for identifying abnormal noise of an electric machine. As illustrated in FIG. 1, the method includes the following steps.

At step 101, rotational speed information of the electric machine and sound time-domain data are acquired.

The electric machine refers to an electromagnetic apparatus that realizes the conversion or transmission of electrical energy in accordance with law of electromagnetic induction, which is divided into an electric motor and an electric generator. In this embodiment, the electric machine may be a motor device in a vehicle.

The rotational speed information of the electric machine may include a rotational speed of the electric machine at a current moment, or rotational speeds at different time points in a current time period, or rotational speeds at each time point within a continuous period of time, and so on. The corresponding sound time-domain data may include the sound time-domain data at the current moment, or the sound time-domain data in the current time period, or the sound time-domain data over a continuous period of time, and so on.

Sound emitted by the electric machine varies at different rotational speeds, and the corresponding characteristics of abnormal noise occurrence also differ. In the case of identifying whether the electric machine has the abnormal noise in this embodiment, it is necessary to acquire the rotational speed information and the sound time-domain data of the electric machine at a specific time, and then conduct targeted analysis to further accurately determine whether the electric machine has the abnormal noise at that rotational speed.

It should be noted that the specific time may be a moment when a vehicle speed reaches a preset vehicle speed threshold; the specific time may also be a moment when a temperature of the electric machine reaches a preset temperature threshold; the specific time may further be a time indicated by a user or other times. The specific time may be determined according to actual conditions, and this embodiment of the application does not limit this.

At step 102, a sampling frequency required for identifying the abnormal noise corresponding to the rotational speed information is determined.

Since the sound emitted by the electric machine varies at different rotational speeds, and the corresponding characteristics of abnormal noise occurrence also differ, the sampling frequency required for identifying such abnormal noise accordingly varies. In this embodiment, the sampling frequency required for identifying the corresponding abnormal noise can be accurately analyzed and determined by integrating the rotational speed information of the electric machine, and then a targeted down-sampling processing is performed for this sampling frequency, i.e., the process shown in step 103 is executed.

At step 103, down-sampling is performed on the sound time-domain data according to the sampling frequency.

The purpose of down-sampling the sound time-domain data in this embodiment is to save computing resources. Compared with the current method of analyzing and identifying whether the electric machine has abnormal noise based on complete sampled data, this embodiment can perform the down-sampling on the sound time-domain data, and then conduct analysis and calculation based on the down-sampled sound time-domain data to further identify whether the electric machine has the abnormal noise. This application can simplify the calculation process for identifying the abnormal noise of the electric machine, reduce the computing load, and lower the cost of identifying the abnormal noise of the electric machine while ensuring the accurate identification of whether the electric machine has the abnormal noise.

At step 104, sound energy corresponding to the rotational speed information is analyzed based on a down-sampled sound time-domain data.

Sound energy refers to an acoustic energy obtained by a medium due to acoustic vibration when sound waves propagate in the medium. In this embodiment, the sound energy is a sound spectral energy perceptible to the human ear, which can be specifically converted from a spectral energy.

For example, this embodiment can analyze whether the electric machine has the abnormal noise at the current rotational speed. Based on the sound time-domain data down-sampled via steps 101 to 103, the sound energy at the current rotational speed is calculated, and then whether there is abnormal noise is analyzed and determined according to the sound energy.

A spectrum refers to a representation of a time-domain signal in the frequency domain, which is obtained by performing the Fourier Transform on the signal. As a result, two graphs are obtained, one with frequency as a horizontal axis and amplitude as a vertical axis, and the other with frequency as a horizontal axis and phase as a vertical axis. However, sometimes phase information is omitted, leaving only data of amplitudes corresponding to different frequencies. Sometimes, an "amplitude spectrum" is used to represent changes of amplitude with frequency, and a "phase spectrum" is used to describe changes of phase with frequency. Simply put, the spectrum may indicates which frequency sine waves a signal is composed of, and may also show information such as magnitude and phase of each frequency sine wave.

Sound is a mechanical vibration that can penetrate substances in various states of matter. Sound cannot propagate in a vacuum. The sound heard by people is also a sound wave with a certain frequency. The frequency range of human auditory perception is approximately 20~20000 Hz, and sounds beyond this range are imperceptible to the human ear. Waves below 20Hz are called infrasonic waves, and frequencies above 20 kHz are called ultrasonic waves. The higher the frequency of the sound, the higher the pitch of the sound; the lower the frequency of the sound, the lower the pitch of the sound.

At step 105, whether the electric machine has the abnormal noise is identified by comparing the sound energy with a preset energy threshold.

The preset energy threshold may be an evaluation threshold set for the sound energy, which is used to identify whether the electric machine has the abnormal noise.

The preset energy threshold may be a threshold configured in an abnormal noise identification apparatus of the electric machine, a threshold transmitted to the abnormal noise identification apparatus of the electric machine by other devices, or a threshold obtained by the abnormal noise identification apparatus of the electric machine through other means. The specific manner in which the abnormal noise identification apparatus of the electric machine obtains the preset energy threshold may be determined according to actual conditions, and this embodiment of the application does not limit this.

Compared with the current method of analyzing and identifying whether the electric machine has abnormal noise based on complete sampled data, by applying the technical solution of this application, the sampling frequency required for identifying the abnormal noise corresponding to the current rotational speed of the electric machine is determined according to the current rotational speed of the electric machine, and then the down-sampling is performed on the sound time-domain data according to the sampling frequency, eliminating the need to analyze and calculate complete sampled data. Subsequently, the sound energy corresponding to the current rotational speed can be analyzed based on the down-sampled sound time-domain data, and combined with the preset energy threshold, whether the electric machine has the abnormal noise is identified. This embodiment can simplify a calculation process for identifying the abnormal noise of the electric machine, reduce the computing load, and lower the cost of identifying the abnormal noise of the electric machine while ensuring the accurate identification of whether the electric machine has the abnormal noise.

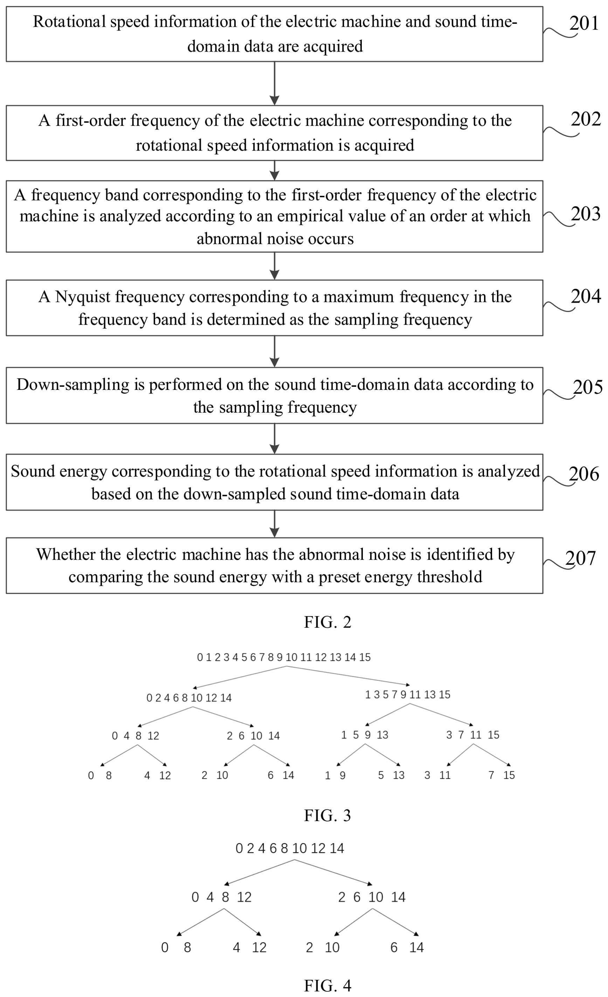

Further, as a refinement and extension of the above embodiment, to fully illustrate the specific implementation process of the method of this embodiment, this embodiment provides a specific method as shown in FIG. 2, which includes: At step 201, rotational speed information of the electric machine and sound time-domain data are acquired.

Optionally, a rotational speed of the electric machine and the sound time-domain data corresponding to a current time-domain window are acquired.

It should be noted that a time length corresponding to the current time-domain window may be 1 second, 2 seconds, or other time lengths. The specific time length corresponding to the current time-domain window may be determined according to actual conditions, and this embodiment of the application does not limit this.

For example, taking the current time-domain window of 0-1s as an example, the rotational speed of the electric machine corresponding to the current 0-1s is acquired as 10 r/s, and the sound time-domain data for the current 0-1s includes 4096 data points.

At step 202, a first-order frequency of the electric machine corresponding to the rotational speed information is acquired.

A resonant frequency refers to a phenomenon that each time a piston moves up and down once, the electric machine will generate two vibrations (one up and one down). Therefore, a vibration frequency of the electric machine is related to the rotational speed of the electric machine. Among them, the vibration with a frequency equal to the rotational speed of the electric machine is called first-order vibration, the vibration with a frequency twice the rotational speed of the electric machine is called second-order vibration, and so on, there are also third-order, fourth-order vibrations, etc.

In this embodiment of the application, the first-order frequency of the electric machine is determined by the rotational speed of the electric machine corresponding to the current time-domain window, which can be specifically expressed as Formula (1) below:

$$f_{Mot} = \frac{Spd}{60} \qquad\qquad (\text{Formula 1})$$

where Spd is the rotational speed of the electric machine, with a unit of revolutions per minute (RPM); $f_{Mot}$ is the first-order frequency of the electric machine.

For example, based on step 201, when the rotational speed of the electric machine corresponding to the current 0-1s is 10 RPM, the corresponding first-order frequency of the electric machine is 1/6 Hz. Similarly, if the current rotational speed of the electric machine is 1200 RPM, the corresponding first-order frequency of the electric machine is 20 Hz, and so on, which will not be illustrated one by one here.

At step 203, a frequency band corresponding to the first-order frequency of the electric machine is analyzed according to an empirical value of an order at which abnormal noise occurs.

Optionally, step 203 may specifically include: multiplying the first-order frequency of the electric machine by the empirical value of the order at which the abnormal noise occurs; adding positive and negative range values to an obtained product to obtain the frequency band.

It should be noted that the empirical value of the order at which the abnormal noise occurs may be a configured value.

In this embodiment of the application, the empirical value of the order at which the abnormal noise occurs refers to an order at which the abnormal noise frequently occurs for the current electric machine. The analysis of the frequency band corresponding to the first-order frequency of the electric machine can be specifically determined by calculating a product of the first-order frequency of the electric machine and the order at which the abnormal noise frequently occurs. Since the frequency band where the abnormal noise occurs in the electric machine cannot be accurately determined based on the empirical value, it is necessary to further expand a range of the frequency band determined according to the empirical value of the order at which the abnormal noise frequently occurs in the electric machine, that is, adding the positive and negative range values to the obtained product to obtain the frequency band. For example, the added positive and negative range values may be set to $\pm 7$ Hz.

For example, based on step 202, if the current first-order frequency of the electric machine is 20 Hz and the order at which the abnormal noise frequently occurs is a second-order, the determined frequency band corresponding to the occurrence of abnormal noise is 40 Hz. By adding the positive and negative range values to the obtained frequency band value (i.e., 40+7=47 Hz, 40-7=33 Hz), the frequency band at which the abnormal noise occurs may be set to 33 Hz to 47 Hz.

At step 204, a Nyquist frequency corresponding to a maximum frequency in the frequency band is determined as the sampling frequency.

A frequency band refers to a part of a radio frequency spectrum located between two specific frequency limits. A unit of the frequency band is hertz (Hz). Popularly speaking, for a channel, a frequency band is a frequency range between the highest frequency and the lowest frequency of signals allowed to be transmitted (considering that attenuation must be within a certain range). If the difference between the two is significant, the frequency band can be considered equal to the highest frequency of the signals allowed to be transmitted.

For a signal, the frequency band is a frequency range between the highest frequency and the lowest frequency contained in the signal (naturally, frequency components must be greater than a certain value). If the difference between the two is significant, the frequency band can be roughly considered equal to the highest frequency of the signal. If a signal contains only one alternating current component of one frequency or alternating current components of a limited number of frequencies, such a signal is called a bandpass signal.

The Nyquist frequency is defined as a minimum sampling frequency required to prevent signal aliasing. Aliasing refers to a phenomenon where, when performing frequency-domain sampling on a signal domain using the discrete Fourier transform (DFT), time-domain periodic extension sequences overlap with each other due to a number of sampling points being less than a length of a time-domain sequence.

Taking the sampling frequency determined under a condition of no overlap as an example, if the sampling frequency is too low, a sampling result will differ from an original sample. If the frequency spectrum of a sample is a band-limited spectrum (i.e., a spectrum that is zero beyond a certain frequency), then the sampling frequency must be greater than twice a current frequency to avoid spectrum overlap and subsequent distortion. This requirement that the sampling frequency must be greater than twice the current frequency is known as a Nyquist criterion.

In this embodiment of the present application, each frequency band value corresponds to a frequency of the electric machine. The maximum frequency of the electric machine within the frequency band range is determined, and the corresponding Nyquist frequency is obtained based on the acquired maximum frequency of the electric machine, which serves as the sampling frequency. The method for calculating the Nyquist frequency is shown in Formula (2) below:

$$f_{NQST} = 2f_s \qquad\qquad \text{(Formula 2)}$$

In Formula (2), $f_{NQST}$ denotes the Nyquist frequency, and $f_s$ denotes the maximum frequency of the electric machine.

For example, based on step 203, if the selected frequency band for abnormal noise occurrence of the electric machine is 33 Hz to 47 Hz, and the maximum frequency of the electric machine is 128 Hz, the Nyquist frequency of the electric machine can be determined as 256 Hz, i.e., the sampling frequency of the electric machine is 256 Hz.

At step 205, down-sampling is performed on the sound time-domain data according to the sampling frequency.

In this embodiment of the present application, performing the down-sampling on the sound time-domain data according to the sampling frequency specifically refers to down-sampling the sound time-domain data to a number of data points corresponding to the sampling frequency.

For example, based on step 204, the sound time-domain data for the current 0-1s includes 4096 data points, and the sampling frequency of the electric machine is 256 Hz. That is, the 4096 time-domain data points are down-sampled to 256 time-domain data points.

At step 206, sound energy corresponding to the rotational speed information is analyzed based on the down-sampled sound time-domain data.

Optionally, step 206 may specifically include: performing a butterfly odd-even permutation of Fast Fourier Transform (FFT) on the down-sampled sound time-domain data to obtain a permutation sequence; analyzing a spectral energy corresponding to each frequency in the frequency band based on the permutation sequence and the Nyquist frequency corresponding to each frequency in the frequency band; and taking a maximum energy obtained from the spectral energy corresponding to each frequency as the sound energy corresponding to the rotational speed information.

Optionally, step 206 may specifically further include: acquiring, according to the Nyquist frequency corresponding to a target frequency, a number K of time-domain samples required for the target frequency; and selecting a target sequence corresponding to the first K sampling points in the permutation sequence to perform butterfly recursive calculation of the FFT, and then multiplying a obtained result by an A-weighting coefficient to obtain the spectral energy corresponding to the target frequency.

Optionally, step 206 may specifically further include: acquiring a smallest integer power of 2 greater than the Nyquist frequency corresponding to the target frequency as the number K of time-domain samples.

FFT is a fast algorithm for DFT. FFT is obtained by improving DFT algorithms based on odd-even, imaginary-real and other characteristics of the DFT.

The butterfly odd-even permutation of the FFT refers to accelerating algorithms by using a point-value polynomial representation and performing polynomial odd-even decomposition recursive calculation with properties of roots of unity. A premise of recursion is to rearrange an original sequence according to a butterfly odd-even distribution.

In this embodiment of the present application, taking the permutation sequence containing 16 numbers, i.e., 0-15, a number R of time-domain samples required for the target frequency being 4, and a minimum number of samples in a sample set required for the down-sampling at the current target frequency being 8 as an example, as shown in FIG. 3 and FIG. 4, an odd-even butterfly permutation is performed. The first K numbers after permutation form the permutation sequence obtained by down-sampling the original sequence of N numbers to a sequence of K numbers. For example, a permutation sequence [0 1 2 3 4 5 6 7 8 9 10 11 12 13 14 15] is down-sampled to 8 numbers, i.e., a new permutation sequence is [0 2 4 6 8 10 12 14].

For example, in the permutation sequence [0 1 2 3 4 5 6 7 8 9 10 11 12 13 14 15], the target sequences corresponding to the first 4 sampling points are [0 4 8 12], [2 6 10 14], [1 5 9 13] and [3 7 11 15]. Other cases can be deduced by analogy, and no specific examples are given here.

For the new sequence permutation, that is, after the permutation of the original sequence, the first K numbers are selected for the butterfly recursive calculation of the FFT to obtain a sequence with the same length as the minimum number of samples in the sample set, so that the spectral energy corresponding to the down-sampled sequence can be obtained. Since the rotational speed varies within the time window, the maximum energy within the window is taken as a window energy, which can tighten an identification of the abnormal noise.

Optionally, the down-sampled spectral energy needs to be converted into the spectral energy perceptible to the human ear, which is specifically shown in Formula (3) below:

$$M_A = M \cdot coe_A \qquad \text{(Formula 3)}$$

where coeA denotes the A-weighting coefficient, representing the human ear's perception of energy across different frequency bands.

In this embodiment of the application, the smallest integer power of 2 greater than the Nyquist frequency corresponding to the target frequency is obtained as the number K of time-domain samples, which is specifically expressed as Formula (4) below:

$$K = \min(2^N > f_{NQST}) \qquad \text{(Formula 4)}$$

where K is the smallest integer power of 2 greater than the Nyquist frequency.

For example, based on step 205, the sampling frequency of the electric machine is 256 Hz (i.e., the Nyquist frequency of the electric machine is 256 Hz), K is 8; if the sampling frequency of the electric machine is 200 Hz, K is 8, and so on, which will not be enumerated one by one here.

At step 207, whether the electric machine has the abnormal noise is identified by comparing the sound energy with a preset energy threshold.

Optionally, step 207 may specifically include: comparing the sound energy corresponding to different rotational speeds with the preset energy threshold respectively, and configuring label information corresponding to different rotational speeds according to an extent of exceeding the preset energy threshold; performing probability density calculation based on the label information corresponding to different rotational speeds respectively; and determining that the electric machine has the abnormal noise in a case where a calculated probability density is greater than a preset density threshold.

A formula for probability density is: probability density = probability/class interval. The probability refers to a likelihood of a random event occurring. For a uniform distribution function, the probability density is equal to the probability of a certain interval (a value range of an event) divided by a length of that interval.

An integral of the probability density over the interval yields an area, and this area represents the probability of the event occurring within this interval. A sum of all such areas equals 1. Therefore, analyzing the probability density at a single point has no practical significance-it must be referenced and compared against an interval. In this embodiment of the present application, the interval selected for the probability density may include several sampling points before and after a current rotational speed sampling point, which is not specifically limited herein.

For example, based on step 206, the electric machine undergoes acceleration from 0 to 100 RPM. The sound energy corresponding to different rotational speeds is determined, and a label is assigned to an energy value corresponding to the current rotational speed according to the magnitude of exceeding the threshold. A labeling method can be either continuous or discrete. In this embodiment of the application, a discrete labeling method is adopted and implemented based on a power of energy.

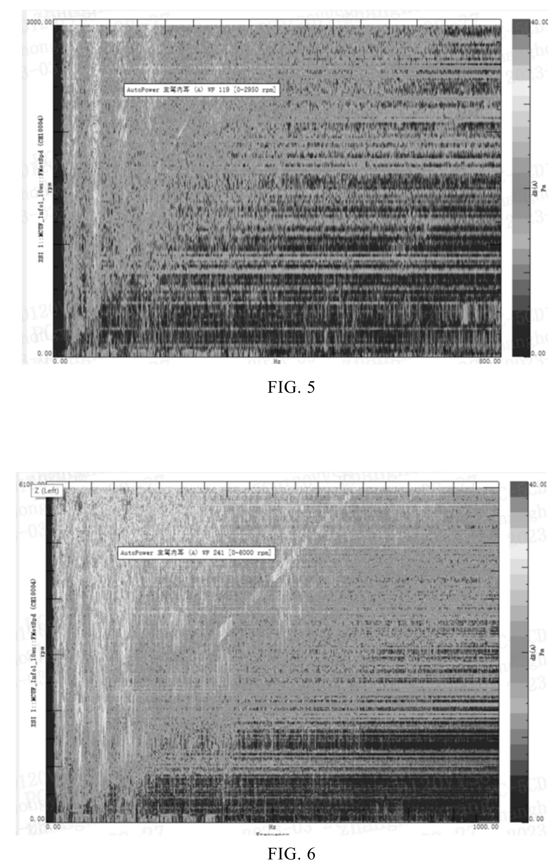

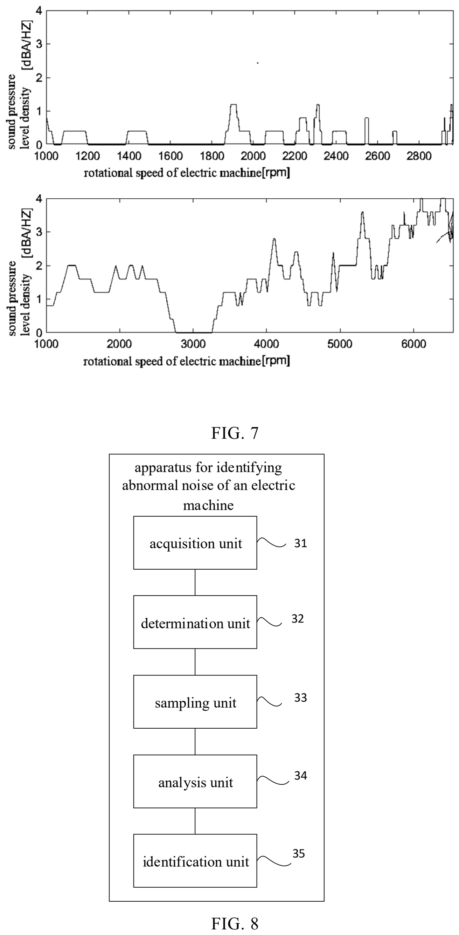

For example, the label information can be divided into three grades: a value of 1 for exceeding a threshold by 0-3 dB, 2 for 3-6 dB, 3 for 6-9 dB, and 0 for not exceeding the threshold. Abnormal noise is deemed to occur when the probability density exceeds 2.5. Corresponding to the results, FIG. 5 and FIG. 6 shows a comparison of full-volume data waterfall diagrams, respectively, where FIG. 5 shows a test without whistling and FIG. 6 shows a test with whistling. It can be observed that the test in FIG. 6 exhibits obvious order energy concentration. The test in FIG. 6 has a relatively high order energy density, thus enabling to identify the abnormal noise. The corresponding relationship between the rotational speed of the electric machine and spectral data can be illustrated as shown in FIG. 7.

Compared with the current prior art, aiming at a situation where abnormal noises such as whistling may be generated when the electric machine in the vehicle is in operation, this embodiment simplifies the calculation process for identifying the abnormal noise of the electric machine, reduces the computational load, lowers the cost of identifying the abnormal noise of the electric machine, and identifies the abnormal noise of the electric machine of fixed orders.

Further, as a specific implementation of the methods shown in FIGS. 1 to 2, this embodiment provides an apparatus for identifying abnormal noise of an electric machine, as shown in FIG. 8. The apparatus includes: an acquisition unit 31, a determination unit 32, a sampling unit 33, an analysis unit 34, and an identification unit 35.

The acquisition unit 31 is configured to acquire rotational speed information of the electric machine and sound time-domain data.

The determination unit 32 is configured to determine a sampling frequency required for identifying the abnormal noise corresponding to the rotational speed information.

The sampling unit 33 is configured to perform down-sampling on the sound time-domain data according to the sampling frequency.

The analysis unit 34 is configured to analyze sound energy corresponding to the rotational speed information based on a down-sampled sound time-domain data.

The identification unit 35 is configured to identify whether the electric machine has the abnormal noise by comparing the sound energy with a preset energy threshold.

In specific application scenarios, the acquisition unit 31 is further configured to acquire a first-order frequency of the electric machine corresponding to the rotational speed information;

the analysis unit 34 is further configured to analyze a frequency band corresponding to the first-order frequency of the electric machine according to an empirical value of an order at which the abnormal noise occurs; and

the determination unit 32 is further configured to determine a Nyquist frequency corresponding to a maximum frequency in the frequency band as the sampling frequency.

In specific application scenarios, the determination unit 32 is further configured to multiply the first-order frequency of the electric machine by the empirical value of the order at which the abnormal noise occurs; and add positive and negative range values to an obtained product to obtain the frequency band.

In specific application scenarios, the analysis unit 34 is further configured to perform a butterfly odd-even permutation of FFT on the down-sampled sound time-domain data to obtain a permutation sequence; analyze a spectral energy corresponding to each frequency in the frequency band based on the permutation sequence and the Nyquist frequency corresponding to each frequency in the frequency band; and take a maximum energy obtained from the spectral energy corresponding to each frequency as the sound energy corresponding to the rotational speed information.

In specific application scenarios, the analysis unit 34 is further configured to acquire, according to the Nyquist frequency corresponding to a target frequency, a number K of time-domain samples required for the target frequency; and select a target sequence corresponding to the first K sampling points in the permutation sequence to perform butterfly recursive calculation of the FFT, and then multiplying a obtained result by an A-weighting coefficient to obtain the spectral energy corresponding to the target frequency.

In specific application scenarios, the analysis unit 34 is further configured to acquire a smallest integer power of 2 greater than the Nyquist frequency corresponding to the target frequency as the number K of time-domain samples.

In specific application scenarios, the identification unit 35 is further configured to compare the sound energy corresponding to different rotational speeds with the preset energy threshold respectively, and configuring label information corresponding to different rotational speeds according to an extent of exceeding the preset energy threshold; and perform probability density calculation based on the label information corresponding to different rotational speeds respectively; and

the determination unit 32 is further configured to determine that the electric machine has the abnormal noise in a case where a calculated probability density is greater than a preset density threshold.

It should be noted that for other corresponding descriptions of each functional unit involved in the apparatus for identifying abnormal noise of the electric machine provided in this embodiment, reference may be made to the corresponding descriptions in FIGS. 1 to 2, which are not be repeated herein.

Based on the methods shown in FIGS. 1 to 2 above, correspondingly, the embodiment of the application also provides a computer-readable storage medium having a computer program stored thereon. When the computer program is executed by a processor, the methods shown in FIGS. 1 to 2 above are implemented.

Based on such an understanding, the technical solutions of the application may be embodied in the form of a software product, which may be stored in a non-volatile storage medium (which may be a compact disc read-only memory (CD-ROM), a universal serial bus (USB) flash drive, a removable hard disk, etc.) and includes several instructions for causing a computer device (which may be a personal computer, a server, a network device, etc.) to execute the methods in each implementation scenario of the application.

Based on the methods illustrated in FIGS. 1 to 2 above and the virtual apparatus embodiment shown in FIG. 8, to achieve the aforementioned objectives, this embodiment of the application further provides an electronic device, which may be deployed on a vehicle side (e.g., a new energy vehicle) or a server side, etc. The electronic device includes a storage medium and a processor; the storage medium is configured to store a computer program; the processor is configured to execute the computer program to implement the methods illustrated in FIGS. 1 to 2 above.

Optionally, the above physical device may further include a user interface, a network interface, a camera, a radio frequency (RF) circuit, sensors, an audio circuit, a wireless fidelity (Wi-Fi) module, etc. The user interface may include a display screen and an input unit such as a keyboard. Optionally, the user interface may further include a USB interface, a card reader interface, etc. The network interface may optionally include a standard wired interface and a wireless interface (e.g., a WI-FI interface), etc.

Those skilled in the art can understand that the structure of the aforementioned physical device provided in this embodiment does not constitute a limitation on the physical device, and the physical device may include more or fewer components, combine certain components, or adopt different component arrangements.

The storage medium may further include an operating system and a network communication module. The operating system is a program that manages hardware and software resources of the aforementioned physical device, supporting the operation of information processing programs and other software and/or programs. The network communication module is configured to implement communication between various components inside the storage medium and between the storage medium and other hardware and software in the information processing physical device.

Further, based on the methods illustrated in FIGS. 1 to 2 above, the virtual apparatus embodiment shown in FIG. 8, and the aforementioned electronic device embodiment, this embodiment further provides a vehicle, which may include the aforementioned electronic device and thus can execute the methods illustrated in FIGS. 1 to 2.

Through the above descriptions of the embodiments, those skilled in the art can clearly understand that the application can be implemented by means of software in combination with necessary general hardware platforms or by hardware. By applying the solution of the embodiment, compared with the current prior art, aiming at the situation where abnormal noises such as whistling may occur during the operation of the electric machine in the vehicle, this embodiment can simplify the calculation process for identifying the abnormal noise of the electric machine, reduce the computational load, lower the cost of identifying the abnormal noise of the electric machine, and identify the abnormal noise of the electric machine of fixed orders.

It should be noted that in this article, relational terms such as "first" and "second" are used only to distinguish one entity or operation from another, and do not necessarily require or imply any actual relationship or order between these entities or operations. Moreover, the term "comprise" or any other variation thereof is intended to cover non-exclusive inclusion, such that a process, method, article or device including a series of elements includes not only those elements but also other elements not expressly listed, or elements inherent to such process, method, article or device. Without further restrictions, the element defined by a phrase "comprising a..." does not exclude the presence of additional identical elements in the process, method, article, or device that comprises the element.

The foregoing descriptions are merely specific implementations of the application, enabling those skilled in the art to understand or implement the application. Various modifications to these embodiments will be apparent to those skilled in the art, and the general principles defined herein may be implemented in other embodiments without departing from the spirit or scope of the present application. Therefore, the application will not be limited to the embodiments described herein, but shall conform to the broadest scope consistent with the principles and novel features disclosed herein.

## INDUSTRIAL APPLICABILITY

The embodiments of the present application provide the method and apparatus for identifying abnormal noise of the electric machine, the computer-readable storage medium, the electronic device and the vehicle. The method for identifying abnormal noise of the electric machine includes: acquiring rotational speed information of the electric machine and sound time-domain data; determining a sampling frequency required for identifying the abnormal noise corresponding to the rotational speed information; performing down-sampling on the sound time-domain data according to the sampling frequency; analyzing sound energy corresponding to the rotational speed information based on a down-sampled sound time-domain data; and identifying whether the electric machine has the abnormal noise by comparing the sound energy with a preset energy threshold. By adopting the implementation scheme of the above method, the calculation process for identifying the abnormal noise of the electric machine can be simplified, the computational load can be reduced, the cost of identifying the abnormal noise of the electric machine can be lowered, and the abnormal noise of the electric machine of fixed orders can be identified.

## Claims

1. A method for identifying abnormal noise of an electric machine, comprising:

      acquiring rotational speed information of the electric machine and sound time-domain data;

determining a sampling frequency required for identifying the abnormal noise corresponding to the rotational speed information;

performing down-sampling on the sound time-domain data according to the sampling frequency;

analyzing sound energy corresponding to the rotational speed information based on a down-sampled sound time-domain data; and

identifying whether the electric machine has the abnormal noise by comparing the sound energy with a preset energy threshold.

2. The method according to claim 1, wherein determining the sampling frequency required for identifying the abnormal noise corresponding to the rotational speed information comprises:

acquiring a first-order frequency of the electric machine corresponding to the rotational speed information;

analyzing a frequency band corresponding to the first-order frequency of the electric machine according to an empirical value of an order at which the abnormal noise occurs; and

determining a Nyquist frequency corresponding to a maximum frequency in the frequency band as the sampling frequency.

3. The method according to claim 2, wherein analyzing the frequency band corresponding to the first-order frequency of the electric machine according to the empirical value of the order at which the abnormal noise occurs comprises:

multiplying the first-order frequency of the electric machine by the empirical value of the order at which the abnormal noise occurs; and

adding positive and negative range values to an obtained product to obtain the frequency band.

4. The method according to claim 2, wherein analyzing the sound energy corresponding to the rotational speed information based on the down-sampled sound time-domain data comprises:

performing a butterfly odd-even permutation of Fast Fourier Transform (FFT) on the down-sampled sound time-domain data to obtain a permutation sequence;

analyzing a spectral energy corresponding to each frequency in the frequency band based on the permutation sequence and the Nyquist frequency corresponding to each frequency in the frequency band; and

taking a maximum energy obtained from the spectral energy corresponding to each frequency as the sound energy corresponding to the rotational speed information.

5. The method according to claim 4, wherein analyzing the spectral energy corresponding to each frequency in the frequency band based on the permutation sequence and the Nyquist frequency corresponding to each frequency in the frequency band comprises:

acquiring, according to the Nyquist frequency corresponding to a target frequency, a number K of time-domain samples required for the target frequency; and

selecting a target sequence corresponding to the first K sampling points in the permutation sequence to perform butterfly recursive calculation of the FFT, and then multiplying a obtained result by an A-weighting coefficient to obtain the spectral energy corresponding to the target frequency.

6. The method according to claim 5, wherein acquiring, according to the Nyquist frequency corresponding to the target frequency, the number K of time-domain samples required for the target frequency comprises:

acquiring a smallest integer power of 2 greater than the Nyquist frequency corresponding to the target frequency as the number K of time-domain samples.

7. The method according to any one of claims 1 to 6, wherein identifying whether the electric machine has the abnormal noise by comparing the sound energy with the preset energy threshold comprises:

comparing the sound energy corresponding to different rotational speeds with the preset energy threshold respectively, and configuring label information corresponding to different rotational speeds according to an extent of exceeding the preset energy threshold;

performing probability density calculation based on the label information corresponding to different rotational speeds respectively; and

determining that the electric machine has the abnormal noise in a case where a calculated probability density is greater than a preset density threshold.

8. An apparatus for identifying abnormal noise of an electric machine, comprising:

an acquisition unit configured to acquire rotational speed information of the electric machine and sound time-domain data;

a determination unit configured to determine a sampling frequency required for identifying the abnormal noise corresponding to the rotational speed information;

a sampling unit configured to perform down-sampling on the sound time-domain data according to the sampling frequency;

an analysis unit configured to analyze sound energy corresponding to the rotational speed information based on a down-sampled sound time-domain data; and

an identification unit configured to identify whether the electric machine has the abnormal noise by comparing the sound energy with a preset energy threshold.

9. A computer-readable storage medium having a computer program stored thereon, wherein the computer program, when executed by a processor, implements the method according to any one of claims 1 to 7.

10. An electronic device, comprising a storage medium, a processor, and a computer program stored on the storage medium and executable on the processor, wherein the processor, when executing the computer program, implements the method according to any one of claims 1 to 7.

11. A vehicle, comprising: the apparatus according to claim 8, or the electronic device according to claim 10.

Rotational speed information of the electric machine and sound time-domain data are acquired ⏛101

A sampling frequency required for identifying the abnormal noise corresponding to the rotational speed information is determined ⏛102

Down-sampling is performed on the sound time-domain data according to the sampling frequency ⏛103

Sound energy corresponding to the rotational speed information is analyzed based on a down-sampled sound time-domain data ⏛104

Whether the electric machine has the abnormal noise is identified by comparing the sound energy with a preset energy threshold ⏛105

FIG. 1

| | |
|---|---|
| Rotational speed information of the electric machine and sound time-domain data are acquired | 201 |
| A first-order frequency of the electric machine corresponding to the rotational speed information is acquired | 202 |
| A frequency band corresponding to the first-order frequency of the electric machine is analyzed according to an empirical value of an order at which abnormal noise occurs | 203 |
| A Nyquist frequency corresponding to a maximum frequency in the frequency band is determined as the sampling frequency | 204 |
| Down-sampling is performed on the sound time-domain data according to the sampling frequency | 205 |
| Sound energy corresponding to the rotational speed information is analyzed based on the down-sampled sound time-domain data | 206 |
| Whether the electric machine has the abnormal noise is identified by comparing the sound energy with a preset energy threshold | 207 |

FIG. 2

FIG. 3

FIG. 4

FIG. 5

FIG. 6

FIG. 7

FIG. 8

## INTERNATIONAL SEARCH REPORT

International application No.

**PCT/CN2024/099867**

### A. CLASSIFICATION OF SUBJECT MATTER

G10L 25/51(2013.01)i; G10L 25/18(2013.01)i; G10L 25/21(2013.01)i; G01P 3/00(2006.01)i; G01H 17/00(2006.01)i

According to International Patent Classification (IPC) or to both national classification and IPC

### B. FIELDS SEARCHED

Minimum documentation searched (classification system followed by classification symbols)

IPC:G10L25/-; G01P3/-; G01H 17/-

Documentation searched other than minimum documentation to the extent that such documents are included in the fields searched

Electronic data base consulted during the international search (name of data base and, where practicable, search terms used)

CNTXT, DWPI, ENTXT, CNKI: 北京罗克维尔斯科技有限公司, 转速, 速度, 降采样, 声音, 音频, 噪声, 异响, 异常, 非正常, 故障, 目标, 能量, speed, audio, sound, nois+, abnormal sound, downsampl+, energy

### C. DOCUMENTS CONSIDERED TO BE RELEVANT

| Category* | Citation of document, with indication, where appropriate, of the relevant passages | Relevant to claim No. |
|---|---|---|
| Y | CN 114858487 A (CHINA FAW CO., LTD.) 05 August 2022 (2022-08-05) description, paragraphs [34]-[60] | 1-11 |
| Y | CN 109741762 A (HANGZHOU JIANAN YUNZHI INFORMATION TECHNOLOGY CO., LTD.) 10 May 2019 (2019-05-10) description, paragraphs [40]-[67] | 1-11 |
| A | CN 103712799 A (FORD GLOBAL TECHNOLOGIES, LLC) 09 April 2014 (2014-04-09) entire document | 1-11 |
| A | CN 114624022 A (DONGFENG MOTOR GROUP CO., LTD.) 14 June 2022 (2022-06-14) entire document | 1-11 |
| A | CN 115839845 A (JIANGSU XCMG STATE KEY LABORATORY TECHNOLOGY CO., LTD.) 24 March 2023 (2023-03-24) entire document | 1-11 |
| A | JP H0630594 A (NIPPONDENSO CO., LTD. et al.) 04 February 1994 (1994-02-04) entire document | 1-11 |

☑ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **19 August 2024** | **26 August 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| | International application No. |
|---|---|
| | **PCT/CN2024/099867** |

### C. DOCUMENTS CONSIDERED TO BE RELEVANT

| Category* | Citation of document, with indication, where appropriate, of the relevant passages | Relevant to claim No. |
|---|---|---|
| A | JP H08278191 A (NISSAN MOTOR CO., LTD.) 22 October 1996 (1996-10-22)<br>entire document | 1-11 |

Form PCT/ISA/210 (second sheet) (July 2022)

## INTERNATIONAL SEARCH REPORT
### Information on patent family members

International application No.

**PCT/CN2024/099867**

| Patent document cited in search report | | | Publication date (day/month/year) | Patent family member(s) | | | Publication date (day/month/year) |
|---|---|---|---|---|---|---|---|
| CN | 114858487 | A | 05 August 2022 | None | | | |
| CN | 109741762 | A | 10 May 2019 | None | | | |
| CN | 103712799 | A | 09 April 2014 | US | 2014100714 | A1 | 10 April 2014 |
| CN | 114624022 | A | 14 June 2022 | None | | | |
| CN | 115839845 | A | 24 March 2023 | None | | | |
| JP | H0630594 | A | 04 February 1994 | JP | 3168684 | B2 | 21 May 2001 |
| JP | H08278191 | A | 22 October 1996 | JP | 3211615 | B2 | 25 September 2001 |
| | | | | KR | 960038372 | A | 21 November 1996 |

Form PCT/ISA/210 (patent family annex) (July 2022)

**REFERENCES CITED IN THE DESCRIPTION**

**Patent documents cited in the description**

- CN 202310731674